# EUROPEAN PATENT APPLICATION

(11) **EP 4 832 531 A1**
(43) Date of publication of application: **28.10.2026**
(21) Application number: 23962013.1
(22) Date of filing: 22.12.2023
(51) Int. Cl.: H04W 12/03

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LI, Meng, Dongguan, Guangdong 523860 (CN); GAN, Lu, Dongguan, Guangdong 523860 (CN)
(74) Representative: Taor, Simon Edward William
(86) International application number: PCT/CN2023/141253
(87) International publication number: WO 2025/129691

(57) **Abstract**

The present application relates to a communication method, a device, a computer readable storage medium, a computer program product and a computer program. The method comprises: sending a sensing signal, wherein the sensing signal is obtained by adjusting a sensing modulation symbol on the basis of an adjustment parameter, the adjustment parameter is calculated on the basis of a shared parameter of a sending device and a receiving device, and the adjustment parameter comprises at least one of the following: a phase adjustment parameter and an amplitude adjustment parameter.

## Description

### TECHNICAL FIELD

The present application relates to the field of communications, and more particularly, to a communication method, device, computer-readable storage medium, computer program product, and computer program.

### BACKGROUND

In the related art, 3GPP technology has initiated research on communication services that integrate sensing. By a service provided in this integrated sensing and communication scenario, one communication device (such as a user equipment (UE), a base station, etc.) transmits a sensing signal, another communication device (or the same communication device) measures an echo signal of the sensing signal, which enables tracking and potentially identifying any target in the environment (sensing target). Herein the sensing target may include a person or any object not carrying a UE. However, in the above sensing scenarios, there may be problems that personal privacy may be affected. Therefore, how to enhance sensing security to prevent the privacy of the sensing target from being compromised becomes a problem that needs to be solved.

### SUMMARY

Embodiments of the present application provide a communication method, a device, a computer-readable storage medium, a computer program product, and a computer program.

An embodiment of the present application provides a communication method executed by a transmitting device, the method includes the following operations.

A sensing signal is transmitted, herein the sensing signal is obtained by adjusting a sensing modulation symbol based on an adjustment parameter, the adjustment parameter is calculated based on a shared parameter of the transmitting device and a receiving device, the adjustment parameter includes at least one of a phase adjustment parameter or an amplitude adjustment parameter.

An embodiment of the present application provides a communication method executed by a receiving device, the method includes the following operations.

An echo signal of a sensing signal is received, herein the sensing signal is obtained by adjusting a sensing modulation symbol based on an adjustment parameter, the adjustment parameter is calculated based on a shared parameter of the transmitting device and a receiving device, the adjustment parameter includes at least one of a phase adjustment parameter or an amplitude adjustment parameter.

An embodiment of the present application provides a transmitting device, which includes a first communication unit.

The first communication unit is configured to transmit a sensing signal, herein the sensing signal is obtained by adjusting a sensing modulation symbol based on an adjustment parameter, the adjustment parameter is calculated based on a shared parameter of the transmitting device and a receiving device, the adjustment parameter includes at least one of a phase adjustment parameter or an amplitude adjustment parameter.

An embodiment of the present application provides a receiving device, which includes a second communication unit.

The second communication unit is configured to receive an echo signal of a sensing signal, herein the sensing signal is obtained by adjusting a sensing modulation symbol based on an adjustment parameter, the adjustment parameter is calculated based on a shared parameter of the transmitting device and a receiving device, the adjustment parameter includes at least one of a phase adjustment parameter or an amplitude adjustment parameter.

An embodiment of the present application provides a transmitting device including a transceiver, a processor, and a memory. The memory is configured to store a computer program, and the processor is configured to call and execute the computer program stored in the memory to cause the transmitting device to perform the above method.

An embodiment of the present application provides a receiving device including a transceiver, a processor, and a memory. The memory is configured to store a computer program, and the processor is configured to call and execute the computer program stored in the memory to cause the receiving device to perform the method described above.

An embodiment of the present application provides a chip for implementing the above method.

Specifically, the chip includes a processor for calling and executing a computer program from a memory so that a device on which the chip is mounted performs the above-described method.

Embodiments of the present application provide a computer-readable storage medium for storing a computer program that causes the device to execute the above-described method when the computer program is run by the device.

Embodiments of the present application provide a computer program product comprising computer program instructions that cause a computer to perform the above-described method.

Embodiments of the present application provide a computer program that, when executed on a computer, causes the computer to perform the above-described method.

By adopting the above scheme, a phase adjustment parameter and/or an amplitude adjustment parameter are calculated using a parameter shared only by both a receiving device and a transmitting device, and then phase and/or amplitude adjustment is performed on the sensing signal based on the phase adjustment parameter and/or the amplitude adjustment parameter. In this way, the phase and/or amplitude of the sensing signal can be hidden, and only the receiving device sharing the same parameter as the transmitting device can obtain the correct sensing result, so that the privacy of the sensing target can be protected from being stolen from the sensing signal level, and the sensing security is improved.

### BRIEF DESCRIPTION OF THE DRAWINGS

FIG. 1 is a schematic diagram of an application scenario according to an embodiment of the present application.
FIG. 2 is a schematic flowchart of a communication method according to an embodiment of the present application.
FIG. 3 is a schematic flowchart of a communication method according to another embodiment of the present application.
FIG. 4 is a schematic diagram of a downlink sensing scenario according to an embodiment of the present application.
FIG. 5 is a schematic diagram for calculation of a key stream according to an embodiment of the present application.
FIG. 6 is a schematic diagram for calculation of a hash sequence according to an embodiment of the present application.
FIG. 7 is a schematic diagram of a processing scene of adjusting a phase and amplitude of a sensing signal according to an embodiment of the present application.
FIG. 8 is a schematic diagram of a processing scenario of demodulating an echo signal of a sensing signal according to an embodiment of the present application.
FIG. 9 is a diagram illustrating a processing flow example in a downlink sensing scenario of a communication method according to an embodiment of the present application.
FIG. 10 is a schematic block diagram of a transmitting device according to an embodiment of the present application.
FIG. 11 is a schematic block diagram of a receiving device according to an embodiment of the present application.
FIG. 12 is a schematic block diagram of a communication device according to an embodiment of the present application.
FIG. 13 is a schematic block diagram of a chip according to an embodiment of the present application.
FIG. 14 is a schematic block diagram of a communication system according to an embodiment of the present application.

### DETAILED DESCRIPTION

Technical solutions according to embodiments of the present application can be applied to various communication systems, such as a Long Term Evolution (LTE) system, an advanced LTE (LTE-A) system, a new radio (NR) system, an evolution system of the NR system, a wireless local area network (WLAN), a wireless fidelity (Wi-Fi), or other communication systems.

Various embodiments of the present application are described in conjunction with a network device and a terminal. The terminal may be mobile or fixed, and the terminals may also be referred to as mobile stations, subscriber units, or the like. The terminal may be a station in a WLAN, or may be a terminal such as a smart terminal, a wireless modem, a notebook computer, a tablet computer, or the like. In the embodiments of the present application, the terminal may be a Virtual Reality (VR) terminal/Augmented Reality (AR) terminal, an industrial control terminal, an unmanned driving terminal, a telemedicine terminal, a smart grid terminal, a transportation security terminal, a smart city terminal, a wireless terminal of a smart home, or the like. As an example and not limitation, in an embodiment of the present application, the terminal may also be a wearable device.

In an embodiment of the present application, the network device may be a device for communicating with a terminal, an access point in a WLAN, an evolved base station in LTE, a relay station, an in-vehicle device, a wearable device, a network device (gNB) in an NR network, a network device in a future evolved Public Land Mobile Network (PLMN) network, a network device in a non-terrestrial network, or the like. By way of example and not limitation, in embodiments of the present application, the network device may have mobile characteristics, for example, the network device may be a mobile device.

It should be appreciated that the terms "system" and "network" are often used interchangeably herein. Herein, the term "and/or" is only an association relationship describing associated objects, and means that there may be three relationships, for example, A and/or B, which may mean that A alone exists, both A and B exist, or B alone exists. In addition, the character "/" in this article generally indicates that the related objects before and after "/" are in an "or" relationship. It should be appreciated that the "indication" mentioned in the embodiments of the present application may be a direct indication, an indirect indication, or an associated relationship. For example, A indicates B, which may mean that A directly indicates B, for example, B can be acquired through A; or which may mean that A indicates B indirectly, for example, A indicates C, and B can be obtained through C; or which may mean that there is an association relationship between A and B. In the description of the embodiments of the present application, the term "corresponding to" may indicate that there is a direct correspondence or indirect correspondence relationship between two items, may indicate that there is a correlation relationship between the two items, or may indicate a relationship between indicating and being indicated, configuring and being configured, or the like.

In order to facilitate understanding of the technical solutions of the embodiments of the present application, the related technologies of the embodiments of the present application will be described below, and the related technologies below can be arbitrarily combined with the technical solutions of the embodiments of the present application as options, and all of them belong to the scope of protection of the embodiments of the present application.

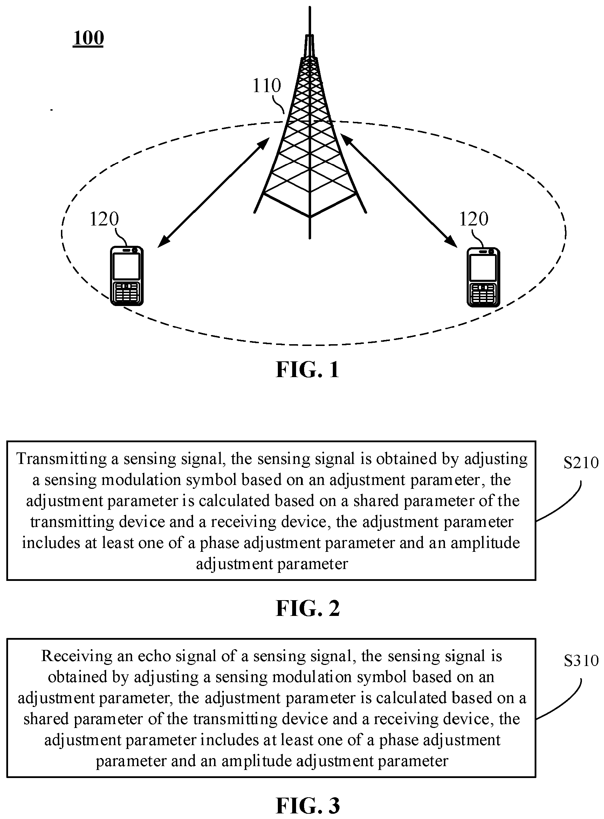

FIG. 1 exemplarily illustrates a communication system 100. The communication system includes a network device 110 and two terminals 120. In one possible implementation, the communication system 100 may include a plurality of network devices 110, and in a coverage range of each network device 110, another number of terminals 120 may be included, which is not limited in the embodiments of the present application. In one possible implementation, the communication system 100 may further include a mobility management entity, an access and mobility management function, and other network entities, which are not limited in the embodiments of the present application. The network device may further include an access network device and a core network device. That is, the communication system may further include a plurality of core networks for communicating with access network devices. The access network device may be a base station of an LTE, LTE-A, or NR system. Taking the communication system illustrated in FIG. 1 as an example, the communication device may include a network device and a terminal having a communication function, and the communication device may further include other devices in the communication system, such as other network entities such as a network controller and a mobility management entity, but this is not limited in the embodiments of the present application.

FIG. 2 is a schematic flowchart of a communication method performed by a transmitting device according to an embodiment of the present application. The method includes at least part of the following.

At S210, a sensing signal is transmitted. The sensing signal is obtained by adjusting a sensing modulation symbol based on an adjustment parameter. The adjustment parameter is calculated based on a shared parameter of the transmitting device and a receiving device. The adjustment parameter includes at least one of a phase adjustment parameter and an amplitude adjustment parameter.

FIG. 3 is a schematic flowchart of a communication method performed by a receiving device according to another embodiment of the present application. The method includes at least part of the following.

At S310, an echo signal of a sensing signal is received. The sensing signal is obtained by adjusting a sensing modulation symbol based on an adjustment parameter. The adjustment parameter is calculated based on a shared parameter of a transmitting device and the receiving device. The adjustment parameter includes at least one of a phase adjustment parameter and an amplitude adjustment parameter.

The transmitting device refers to a device that transmits a sensing signal, and the receiving device refers to a device that receives an echo signal of the sensing signal.

The echo signal of the sensing signal may refer to an echo signal after the sensing signal is reflected by a sensing target. In some possible examples, the echo signal may also be referred to as a reflected signal, and the various possible names of the echo signal are not limited or exhaustive herein.

Optionally, in the downlink sensing scenario, the transmitting device may be an access network device, and the receiving device may be a terminal. The sensing signal transmitted by the transmitting device may be referred to as a downlink sensing signal.

The access network device may include at least one of a base station, a gNB, an eNB, a network device in a future evolved PLMN network, a network device in a Non-Terrestrial Network (NTN) network, a satellite, and the like.

The downlink sensing signal may also be referred to as a downlink sensing reference signal. For example, the downlink sensing reference signal may be at least one of a Positioning Reference Signal (PRS), a Demodulation Reference Signal (DM-RS), a Channel State Information Reference Signal (CSI-RS), and the like, and the specific types of all possible downlink sensing reference signals are not limited or exhaustive herein.

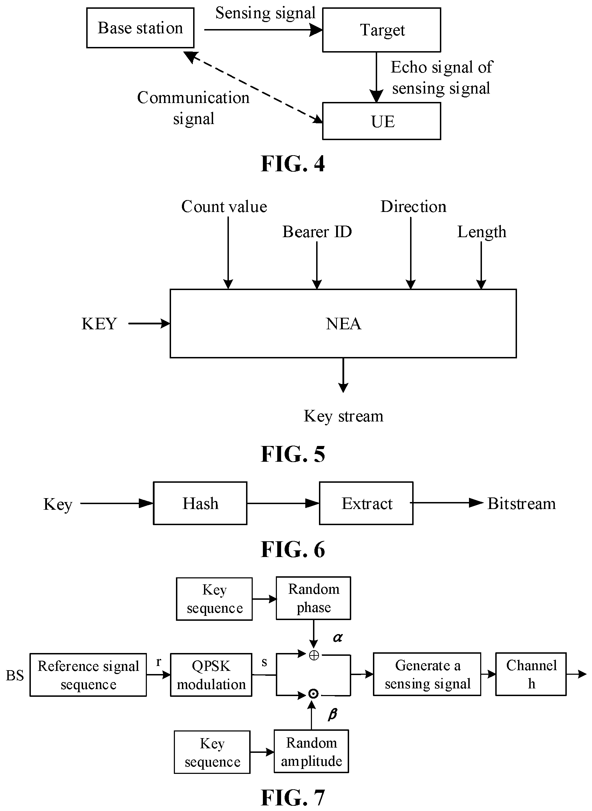

A downlink sensing scenario is illustrated in conjunction with FIG. 4. A base station and a UE (i.e., a terminal) can transmit communication signals to each other. In the downlink sensing scenario, the base station transmits a sensing signal, and the UE receives and measures an echo signal (that is, the echo signal of the sensing signal) after the sensing signal is reflected by a sensing target (referred to as a target for short).

Optionally, in an uplink sensing scenario, the transmitting device may be a terminal, and the receiving device may be an access network device. The sensing signal transmitted by the transmitting device may be referred to as an uplink sensing signal. The uplink sensing signal may also be referred to as an uplink sensing reference signal. For example, the uplink sensing reference signal may be a Sounding Reference Signal (SRS) or the like, and the specific types of all possible uplink sensing reference signals are not limited or exhaustive here.

In some possible implementations, the shared parameter is a shared key. That is, the shared parameter of the transmitting device and the receiving device refers to the shared key of the transmitting device and the receiving device.

The function of the shared key is for calculating the adjustment parameter. Exemplarily, the shared key may also be referred to as a sensing key, or a key used to calculate the adjustment parameter, or a key used to calculate a sensing signal-related parameter, or a key used to calculate a sensing signal-related adjustment parameter, etc., and the possible names of the shared key are not limited or exhaustive herein. The shared key may be represented as K_{sf}. The length of the shared key may be 128 bits, or longer or shorter. If the lengths of the shared keys of both the transmitting device and the receiving device are the same, and the values of each bit of the shared key are the same, all of them are within the protection scope of the present embodiment.

In some embodiments, at the transmitting device side, the shared key is one of the following: a first key between the transmitting device and the receiving device, a key calculated based on the first key, and a key calculated based on a second key between the transmitting device and a core network device. The first key is one of: an access layer key, an access layer security basic key, and a physical layer key.

At the receiving device side, the shared key is one of: a first key between the transmitting device and the receiving device; a key calculated based on the first key; and a key calculated based on a third key between the receiving device and a core network device.

The access layer key may include at least one of a User Plane (UP) integrity protection (or verification) key K_{Upint}, an UP confidentiality key K_{UPenc}, a control plane integrity protection (or verification) key K_{RRCint}, and a control plane confidentiality key K_{RRCenc}. The derivation method for each access layer key is not limited in the present embodiment.

An Access Stratum (AS) security base key may be K_{gNB}. Exemplarily, the K_{gNB} may be an Initial K_{gNB} or a K_{NG-RAN} specified in a relevant protocol. Here, K_{NG-RAN} may be alternatively represented as K_{NG-RAN*}, or alternatively represented as a non-initial key K_{gNB}. The derivation method for the access layer security basic key is not limited in this embodiment.

The physical layer key may be a pair key between the transmitting device and the receiving device. The physical layer key may be generated based on characteristics of a physical layer channel between the transmitting device and the receiving device. The present embodiment does not limit a specific generation method for the physical layer key. Exemplarily, the physical layer key may be denoted as Kphy.

It should be appreciated that the above is only an exemplary description of the first key. In actual processing, the first key may also be a key generated or shared by other means. For example, the first key may also be a next hop key NH, or the first key may be the same other key K configured in the receiving device and the transmitting device by other means, respectively, and all key types that may be the first key are not limited or exhaustive here.

Exemplarily, the first key may be one of an UP integrity protection (or verification) key K_{Upint}, an UP confidentiality key K_{UPenc}, a control plane integrity protection (or verification) key K_{RRCint}, a control plane confidentiality key K_{RRCenc}, an initial K_{gNB}, a K_{NG-RAN}, an NH, and a physical layer key.

Optionally, the first key used by the transmitting device and the receiving device may be a key agreed in default by both parties or specified in a protocol. For example, the transmitting device and the receiving device may use the K_{NG-RAN} as the first key by default, or the transmitting device and the receiving device may use the physical layer key as the first key according to the protocol.

Optionally, the transmitting device may determine the first key. The processing performed by the transmitting device before transmitting the sensing signal may further include that: the transmitting device transmits an identifier of the first key to the receiving device. The processing performed by the receiving device before receiving the echo signal of the sensing signal may further include: the receiving device receives the identifier of the first key from the transmitting device; and determines a first key based on the identifier of the first key. For example, the identifier of the first key may be the identifier of the K_{NG-RAN}, that is, both the transmitting device and the receiving device determine that the K_{NG-RAN} is the first key.

Optionally, the receiving device may determine the first key. The processing performed by the receiving device before receiving the echo signal of the sensing signal may further include that: the receiving device transmits an identifier of the first key to the transmitting device. The processing performed by the transmitting device before transmitting the sensing signal may further include that: the transmitting device receives the identifier of the first key from the receiving device, and determines the first key based on the identifier of the first key.

In one embodiment, the shared key may be the first key. That is, the transmitting device and the receiving device may directly use the same first key as the shared key.

In one embodiment, the shared key is calculated based on the first key.

Before the transmitting device transmits the sensing signal, it may further include an operation of calculating the shared key based on the first key. Accordingly, before the receiving device receives the echo signal of the sensing signal, it may further includes an operation of calculating the shared key based on the first key. It should be appreciated that since the transmitting device and the receiving device should adopt the same key algorithm and the same parameters to calculate the shared keys respectively, the shared keys obtained by the transmitting device and the receiving device should theoretically be the same, and this embodiment does not distinguish between different names of the shared keys of the transmitting device and the receiving device, nor does it separately explain the processing of calculating the shared keys by the transmitting device and the receiving device.

The key algorithm used to calculate the shared key may be default or protocol specified. For example, the key algorithm may include at least one of a key derivation function (KDF), a first authentication function, a second authentication function, a third key generation function (e.g., may be denoted as f3), a fourth key generation function (e.g., may be denoted as f4), a fifth key generation function (e.g., may be denoted as f5), a hash algorithm, an Advanced Encryption Standard (AES), Snow Third Generation (SNOW 3G), ZUChongzhi (ZUC), an XOR calculation, and a direct connection calculation. The hash algorithm may include HMAC-SHA-256 (Hash-based Message Authentication Code-Secure Hash Algorithm-256, a hash-based message authentication code-secure hash algorithm 256, which may be denoted as SHA-256), or other hash algorithms or hash functions, and this embodiment is not exhaustive.

Exemplarily, the shared key may be calculated based on the first key by the following formula: Ksf = KDF(K), where K represents the first key and Ksf represents the shared key.

Optionally, the operation that the shared key is calculated based on the first key may be an operation that the shared key is calculated based on the first key and at least one of the following parameters: an indicator of a sensing service, an identifier of a sensing service, an identifier of a transmitting device, an identifier of a receiving device, and a random number.

The indicator of the sensing service may also be referred to as a sensing service type indicator, which may be defaulted by both the transmitting device and the receiving device or specified in a protocol, and may be expressed as "Sensing", for example.

The identifier of the sensing service may be replaced with a sensing service type, and the identifier of the sensing service may be expressed as a sensing service ID.

The random number may be expressed as Nonce.

The identifier of the sensing service and/or the random number may be configured. For example, before the transmitting device transmits the sensing signal and before the receiving device receives the echo signal of the sensing signal, the sensing function (SF) (or the core network device) may configure the identifier of the sensing service and/or the random number Nonce for the transmitting device and the receiving device, respectively.

For example, the calculation of the shared key may be expressed by the following formula: Ksf = KDF (K, "Sensing", sensing service ID, UE ID, gNB ID, Nonce), where Ksf represents a shared key, K represents a first key, "Sensing" represents an indicator of a sensing service, the sensing service ID is an ID of a sensing service, and the UE ID and the gNB ID are an identifier of a UE and an identifier of a gNB, respectively. Except for the first key K, all other parameters in the formula are optional parameters. The UE is a receiving device, the gNB is a transmitting device, or vice versa.

For example, taking the transmitting device being a gNB and the receiving device being a UE as an example, first, the gNB and the UE share a key K (a first key), and in one mode, K may be the kgNB or a derived key thereof. In another aspect, K may be a latest shared key between the gNB and the UE. The SF receives a sensing service request message (for example, may carry at least one of a service type (service ID), target area information/target object location information, sensing participating node information (such as UE, gNB identifier), etc.), selects an appropriate Radio Access Network (RAN) (i.e., gNB) according to the target area information/target object location information, and transmits a sensing control request to the RAN (gNB) through a Access and Mobility Management Function (AMF) to control the RAN (gNB) to transmit a sensing signal. The sensing control request transmitted to the gNB may include a sensing service ID and/or a random number Nonce. The SF selects an appropriate UE according to the target area information/target object location information, and transmits a sensing control request to the UE through the AMF to control the UE to measure an echo signal of the sensing signal. The sensing control request transmitted to the UE may include a sensing service ID and/or a random number Nonce. The UE and the gNB derive a shared key (shared key Ksf) based on the first key K (or based on the first key and at least one of the following parameters: an indicator of the sensing service, an identifier of a sensing service, an identifier of a transmitting device, an identifier of a receiving device, and a random number). The specific processing of calculating the shared key is the same as that of the foregoing embodiment, and will not be described in detail. Here, the sensing service request message received by the SF is from the AF or the NEF (for example, the AF first transmits it to the NEF (Network Exposure Function), and then the NEF transmits it to the SF), which is not limited here.

In some embodiments, the shared key is calculated separately by the terminal and the core network device, or the shared key is calculated separately by the terminal and the SF. At the access network device side, the shared key is configured, for example, the core network device or the SF may configure or transmit the shared key for the access network device.

In one embodiment, in a downlink sensing scenario, at the receiving device side, the shared key is calculated based on a third key between the receiving device and a core network device. That is, before the receiving device receives the echo signal of the sensing signal, it may further include an operation that the receiving device calculates the shared key based on the third key.

At the transmitting device side, the shared key is configured. That is, before the transmitting device transmits the sensing signal, it may further include an operation that: the transmitting device receives the shared key. Specifically, the shared key may be calculated by the core network device based on the third key, and the core network device may transmit the shared key to the transmitting device. Alternatively, the shared key may be calculated by the SF based on the third key, and the SF transmits the shared key to the transmitting device.

In one embodiment, in the uplink sensing scenario, at the transmitting device side, the shared key is calculated based on a second key between the transmitting device and the core network device. That is, before the transmitting device transmits the sensing signal, it may further include an operation that the transmitting device calculates the shared key based on the second key.

At the receiving device side, the shared key is configured. That is, before the receiving device senses the echo signal of the signal, it may include an operation that the receiving device receives the shared key. Specifically, the shared key may be calculated by the core network device based on a second key, and the core network device transmits the shared key to the receiving device. Alternatively, the shared key may be calculated by the SF based on the second key, and the SF transmits the shared key to the receiving device.

The core network device may include at least one of an Access and Mobility Management Function (AMF), an Authentication Server Function (AUSF), a SEcurity Anchor Function (SEAF), and the like. The AMF and the SEAF may also be joined.

Since the terminal is a transmitting device or a receiving device in different sensing scenarios, a key between the terminal and the core network device when the terminal is the transmitting device is referred to as a second key, and a key between the terminal and the core network device when the terminal is the receiving device is referred to as a third key in order to distinguish the sensing scenarios. In fact, the second key and the third key both refer to keys between the terminal and the core network device. Exemplarily, the second key and the third key may each contain one of the following key types: a K_{AMF} shared between the terminal and the AMF, and a K_{SEAF} shared between the terminal and the AUSF (AMF). It should be appreciated that this is merely an illustrative illustration and does not limit or exhaustive all possible key types of the second key and the third key. It should also be appreciated that although the second key and the third key may contain the same key type, the keys specifically used by the second key and the third key in actual processing may be the same or different. For example, the second key may be K_{AMF} and the third key may be K_{SEAF}.

Optionally, in the downlink sensing scenario, the operation that the receiving device (i.e., the terminal) calculates the shared key based on the third key may be an operation that: the receiving device calculates the shared key based on the third key and at least one of the following parameters: an indicator of the sensing service, an identifier of a sensing service, an identifier of a transmitting device, an identifier of the receiving device, and a random number. The identifier of the sensing service and/or the random number may be transmitted by the core network device to the receiving device (i.e., the terminal), or may be transmitted by the SF to the receiving device (i.e., the terminal), or may be transmitted by the transmitting device (i.e., the access network device) to the receiving device (i.e., the terminal).

Taking the third key being K_{AMF} as an example, the terminal may calculate the shared key by using the following formula: Ksf = KDF (K_{AMF}, "Sensing", sensing service ID, UE ID, gNB ID, Nonce), and the meaning of each parameter in the formula is similar to that of the foregoing embodiment, so repeated description will not be made. In the above formula, except that the third key is K_{AMF}, the other parameters are all optional parameters.

The above is a processing method for the terminal to calculate the shared key in the downlink sensing scenario, and the processing method for the terminal to calculate the shared key in the uplink sensing scenario is similar, except that the key between the terminal and the core network device is referred to as the second key, and the related parameters used for calculating the shared key and the related content transmitted by the core network device or the SF or the access network device to the terminal are similar to the above-described downlink sensing scenario, so the description will not be repeated.

Optionally, in the downlink sensing scenario, the core network device calculates the shared key and configures the shared key to the transmitting device (i.e., the access network device).

The processing of the core network device may include operations that: the core network device may receive a message for triggering the sensing service transmitted by the SF, and the message for triggering the sensing service may carry at least one of the following: an identifier of a sensing service, an identifier of a node participating in the sensing (for example, it may include at least one of an identifier of a terminal and an identifier of an access network device), and the like; the core network device determines a terminal based on the message for triggering the sensing service, and calculates the shared key based on a third key shared by the core network device with the terminal; and the core network device transmits the shared key to the access network device. The method used by the core network equipment to calculate the shared key should be the same as that of the terminal, and no repeated explanation will be made.

In one case, after the core network device receives the message for triggering the sensing service, it may further include an operation that the core network device transmits to the terminal at least one of the following: a random number, an identifier of a sensing service, and an identifier of a third key. Accordingly, the processing of the terminal may include that the terminal receives at least one of the random number, the identifier of the sensing service, and the identifier of the third key from the core network device, and calculates the shared key based on the third key.

In one case, the operation that the core network device transmits the shared key to the access network device may include an operation that the core network device transmits to the access network device the shared key and at least one of the following: a random number, an identifier of a sensing service, and an identifier of a third key. Accordingly, the processing of the access network device may include that: the access network device stores the shared key; transmits at least one of the following: a random number, an identifier of a sensing service, and an identifier of a third key to the terminal. The processing of the terminal may include that the terminal receives at least one of the random number, the identifier of the sensing service, and the identifier of the third key from the access network device, and calculates a shared key based on the third key.

Herein, at least one of the random number, the identifier of the sensing service, and the identifier of the third key carried by the message for triggering the sensing service is optional. For example, the message for triggering the sensing service may not carry the identifier of the third key, and the terminal may determine to use the key shared by itself and the core network device as the third key by default or based on the protocol. For another example, the message for triggering the sensing service may not carry the random number, that is, neither the terminal nor the core network device uses a random number to calculate the shared key. The content that may be carried by the message used for triggering the sensing service is not limited or exhaustive here.
The processing method in which the core network device calculates the shared key and configures the shared key to the access network device in the uplink sensing scenario is similar to the processing method in which the core network device calculates the shared key and configures the shared key to the access network device in the downlink sensing scenario, except that the shared key between the terminal and the core network device is alternatively referred to as the second key. The contents of the message for triggering the sensing service and the messages that the core network device may transmit to the access network device and the terminal are also similar to that in the above-described example, so that repeated description will not be made.

Optionally, in the downlink sensing scenario, the SF calculates the shared key and configures the shared key to the transmitting device (i.e., the access network device).

The processing of the SF may include that the SF calculates a shared key based on the third key, and the SF transmits the shared key to the access network device. Here, the method used by the SF to calculate the shared key should be the same as that of the terminal, and the description will not be repeated. Exemplarily, the shared key may be carried by a sensing control request transmitted by the SF to the access network device (or by the SF to the access network device through the core network device AMF).

The processing of the SF may further include that the SF transmits to the terminal at least one of the following: a random number and an identifier of a sensing service. Accordingly, the terminal may calculate the shared key based on the third key after receiving the random number and/or the identifier of the sensing service transmitted by the SF. For example, at least one of the random number and the identifier of the sensing service may be carried by a sensing control request transmitted by the SF to the terminal (or by the SF to the terminal through the core network device AMF).

In one case, a manner in which the SF determines the third key may be that the third key is determined according to a protocol or a default rule. In this case, the terminal also determines the third key based on the protocol or the default rule.

In one case, the SF may select a key shared between the terminal and any one of the core network devices as the third key. In this case, the SF may further transmit an identifier of the third key to the terminal, and accordingly, the terminal may determine the third key based on the identifier of the third key. Exemplarily, the identifier of the third key may be carried by the sensing control request transmitted by the SF to the terminal (or by the SF to the terminal through the core network device AMF).

It should be appreciated that, regardless of the method used by the SF to determine the third key, the third key may be requested or obtained from a corresponding core network device, which is not limited herein.

The processing method in which the SF calculates the shared key and configures it to the access network device in the uplink sensing scenario is similar to that in which the SF calculates the shared key and configures it to the transmitting device (that is, the access network device) in the downlink sensing scenario, only the shared key between the terminal and the core network device is alternatively referred to as the second key, and the contents and/or parameters that the SF may transmit to the access network device and the terminal respectively are also similar to the above example, so repeated description will not be made.

In some embodiments, the shared key is configured at both the transmitting device and the receiving device side.

Preferably, the SF may generates the shared key and configures or transmits it to the transmitting device and the receiving device, respectively before the transmitting device transmits the sensing signal and before the receiving device receives the echo signal of the sensing signal. The method of generating the shared key by the SF is not limited in the present embodiment. Any method by which the transmitting device and the receiving device finally use the same shared key is within the protection scope of the present embodiment. In one possible example, the above-described SF may also be replaced with a core network device (other core network devices other than the SF).

In some embodiments, the adjustment parameter is calculated based on a first sequence, and the first sequence is one of a key stream calculated based on the shared key, a hash sequence calculated based on the shared key, and a random sequence calculated based on the shared key.

The adjustment parameter needs to be calculated in both the transmitting device and the receiving device. The timing at which the transmitting device calculates the adjustment parameter may be before transmitting the sensing signal. The timing at which the receiving device calculates the adjustment parameter may be before demodulating the echo signal of the sensing signal.

The first sequence is calculated by both the receiving device and the transmitting device respectively. Parameters and algorithms used by the receiving device and the transmitting device to calculate the first sequence are the same, and the first sequences obtained by both the receiving device and the transmitting device are also the same. For example, both the transmitting device and the receiving device calculate a same key stream based on the shared key, as the first sequence. For example, both the transmitting device and the receiving device calculate a same hash sequence as the first sequence based on the shared key, and the like. Therefore, the performing entities are not distinguished hereinafter.

In one embodiment, the first sequence is a key stream calculated based on the shared key.

Specifically, the first sequence may be a key stream calculated based on the shared key and a first parameter. The first parameter may include at least one of the following: a count value, bearer related information, a transmission direction parameter, and a length.

Here, the count value (COUNT) may be the number of encryption/decryption times. For example, the count value is incremented by 1 each time encryption/decryption is performed. The count value needs to be transmitted. For example, the transmitting device may configure the count value to the receiving device, or the receiving device may configure the count value to the transmitting device. The method of configuring the count value is not limited or exhaustive in this embodiment, any method by which the same count value is obtained by both the transmitting device and the receiving device before the transmitting device transmits the sensing signal and before the receiving device receives the echo signal of the sensing signal is within the protection scope of this embodiment.

The bearer related information may refer to a bearer ID (identifier), the bearer ID may also be denoted as BEARER.

The transmission direction parameter may be a direction identifier (or may be represented as a direction flag or DIRECTION) for identifying uplink or a downlink.

The length refers to a length of the key stream (Keystream).

The transmission direction parameter and length can be defaulted between the transmitting device and the receiving device or are specified in a protocol, and are not need to be transmitted.

The algorithm used to calculate the key stream may be default or specified in a protocol, for example, may be represented as an encryption algorithm (or encryption/decryption algorithm) NEA. The NEA may be at least one of an AES algorithm, a SNOW 3G algorithm, a ZUC algorithm, or the like. As long as the algorithms used by both the transmitting device and the receiving device are the same, it is within the protection scope of this embodiment. The length of the key stream may be configured according to the actual situation, and the length of the key stream may be related to the algorithm used to calculate the key stream. For example, when the algorithm used to calculate the key stream is one of the 128-bit AES algorithm, the 128-bit SNOW 3G algorithm, and the 128-bit ZUC algorithm, the length of the key stream may be 128 bits.

An illustrative example is given with reference to FIG. 5, the input parameters of the encryption algorithm NEA include: a key KEY, a count value (COUNT), a bearer ID, a direction (i.e. direction flag or DIRECTION), a length (LENGTH). Both the receiving device and the transmitting device can use the same parameters to obtain the same key stream (KEYSTREAM BLOCK). Where KEY may be a 128-bit shared key Ksf, the length of the count value (COUNT) can be 32 bits; the length of the bearer ID may be 5 bits; the length of the direction DIRECTION (transmission direction parameter) can be 1 bit, for example, DIRECTION should be 0 for uplink and 1 for downlink.

In one embodiment, the first sequence is a hash sequence calculated based on the shared key.

Optionally, the first sequence may be a hash sequence obtained by performing calculation on the shared key based on a hash algorithm.

For example, the method of calculating the Hash sequence can be expressed as: hash sequence = Hash (Key), where Hash () represents a hash function and Key is the shared key. The hash function used by the Hash algorithm can be configured according to the actual situation, for example, the Hash function may be SHA-1 or SHA-256, etc. Here, the Hash function is not limited or exhaustive. As long as the Hash functions used by both the transmitting device and the receiving device are the same, it is within the protection scope of the present embodiment.

Optionally, the first sequence may be a hash sequence having a specified length extracted from an initial hash sequence. The initial hash sequence is obtained by performing calculation on the shared key based on a hash algorithm. The related description of the hash algorithm is the same as the above example, and will not be repeated.

The specified length may be 128 bits, 256 bits, etc. The specified length is not limited or exhaustive here. As long as the specified lengths used by both the transmitting device and the receiving device are the same, for example, the specified lengths may be defaulted by both the transmitting device and the receiving device or specified in a protocol, etc., it is within the scope of protection of this embodiment.

The starting position for extracting a hash sequence of a specified length may also be defaulted by both the transmitting device and the receiving device or specified in a protocol. For example, both the receiving device and the transmitting device use the first bit as the starting position, and the like, and the starting position is not limited or exhaustive here.

Referring to FIG. 6, the processing of the receiving device and the transmitting device may include that: a Key (Key), that is, a shared Key, is taken as an input, and an initial hash sequence is obtained through a hash calculation (that is, a hash function); then a sequence with a specified length is extracted from the initial hash sequence to obtain a bitstream (i.e. hash sequence). Then, both the receiving device and the transmitting device respectively take the obtained hash sequence as the first sequence.

In one embodiment, the first sequence is a random sequence calculated based on the shared key.

The first sequence may be a random sequence is obtained by performing calculation on the shared key based on a Pseudo-Random Number Generator (PRNG).

Here, the random sequence may also be a pseudo-random sequence, for example, it may be an m-sequence or the like.

Exemplarily, the method of calculating the random sequence can be expressed as: random sequence = PRNG (K), where PRNG () represents a calculation function of the pseudo-random number generator, and K is the shared key.

In some embodiments, the phase adjustment parameter may include a phase adjustment parameter and/or an amplitude adjustment parameter, and the receiving device and the transmitting device need to calculate the same type of adjustment parameters.

Optionally, specific types of adjustment parameters to be calculated by the receiving device and the transmitting device may be defaulted by both the transmitting device and the receiving device or may be specified in a protocol.

For example, the sensing measurement result supported by the sensing service is unrelated to the amplitude, that is, for the sensing service for which the sensing measurement result is independent of the measured amplitude, for example, in the gesture recognition scene, a CSI dynamic phase change or the like is used to recognize the gesture made by the person; in this case, the receiving device and the transmitting device may determine by default or based on protocol provisions that the adjustment is performed using a method of random phase rotation, that is, only the phase adjustment parameter needs to be calculated.

For example, the sensing measurement result supported by the sensing service is unrelated to the phase, that is, for a sensing service for which the sensing measurement result is unrelated to the measured phase, for example, in an intrusion detection scenario, a CSI amplitude is used to identify a person's action; in this case, the receiving device and the transmitting device may determine by default or based on protocol provisions that a random amplitude encryption method is used, i.e. only the amplitude adjustment parameters need to be calculated.

For example, the sensing measurements supported by the sensing service are related to both phase and phase, in this case, the receiving device and the transmitting device may determine by default or based on protocol provisions that a method of random amplitude encryption and phase selection is used, that is, it is necessary to calculate the amplitude adjustment parameter and the phase adjustment parameter.

Optionally, the specific type of adjustment parameters to be calculated by the receiving device and the transmitting device may be indicated by the SF.

The receiving device receives a sensing control request from the SF for triggering or instructing the receiving device to measure an echo signal of a sensing signal, and the sensing control request may carry a sensing measurement type. The transmitting device receives a sensing control request from the SF for triggering or instructing the transmitting device to transmit a sensing signal, and the sensing control request may carry a sensing measurement type.

The sensing measurement type may be used to indicate that it is one of amplitude protection, phase protection, combination protection. For example, if the sensing measurement type is used to indicate amplitude protection, the receiving device and the transmitting device respectively determine that the type of the adjustment parameter to be calculated this time is the amplitude adjustment parameter. If the sensing measurement type is used to indicate the phase protection, the receiving device and the transmitting device respectively determine that the type of the adjustment parameter to be calculated this time is the phase adjustment parameter. If the sensing measurement type is used to indicate the combined protection, the receiving device and the transmitting device respectively determine that the types of adjustment parameters to be calculated this time are the phase adjustment parameter and the amplitude adjustment parameter.

In this example, the sensing measurement type may be determined by the SF; or the sensing measurement type may be indicated by the AF (or the AF through the NEF) by transmitting a sensing service request message to the SF. A manner in which the SF or the AF determines the type of sensing measurement may also be that it is determined based on the sensing measurement result. For example, the sensing measurement result supported by the sensing service is unrelated to the amplitude, that is, for the sensing service for which the sensing measurement result is unrelated to the measured amplitude, the SF or the AF may determine that the method of random phase rotation is used to perform adjustment, that is, only the phase adjustment parameter needs to be calculated for phase protection. For another example, the supported sensing measurement result is unrelated to the phase, that is, for a sensing service for which the sensing measurement result is unrelated to the measured phase, the SF or the AF determines that a method of random amplitude encryption is used, that is, only the amplitude adjustment parameter needs to be calculated for amplitude protection. For another example, the supported sensing measurement result is related to both phase and amplitude, and SF or AF determines that the method of random amplitude encryption and phase selection is used, that is, it is necessary to calculate the amplitude adjustment parameter and the phase adjustment parameter for combined protection.

For example, in the downlink sensing scenario, that is, the transmitting device is a gNB and the receiving device is a UE, the SF receives a sensing service request message, and the sensing service request message may carry a service requirement, and the service requirement includes a sensing measurement type. The SF transmits a sensing control request to the gNB through the AMF to control the gNB to transmit a sensing signal. Herein the sensing control request transmitted to the gNB may include a sensing measurement type. The SF transmits a sensing control request to the UE through the AMF to control the UE to measure an echo signal of the sensing signal. The sensing control request transmitted to the UE may include a sensing measurement type. The UE and the gNB determine a specific type of adjustment parameter to be calculated based on the sensing measurement type, respectively. It should be appreciated that since the calculation of the adjustment parameter is mainly described in this example, other contents or parameters that may be included in the sensing control request or the sensing service request message are not limited, and it does not mean that only the contents mentioned in this example are included in the sensing control request and the sensing service request message, but this example is not exhaustive.

In some embodiments, the phase adjustment parameter is calculated based on a first calculation method and the first sequence; and/or the amplitude adjustment parameter is calculated based on a second calculation method and the first sequence, the first calculation method is different from the second calculation method.

The number of the adjustment parameters may be a plurality. Specifically, the phase modulation parameter may be a plurality, and/or the amplitude adjustment parameter may be a plurality. Any one of the phase adjustment parameters is calculated based on a first calculation method and the first sequence; and/or any one of the amplitude adjustment parameters is calculated based on the second calculation method and the first sequence.

The phase adjustment parameter may also alternatively be referred to as a rotating phase, or a random phase, etc., and all possible names thereof are not exhaustive herein. The amplitude adjustment parameter may alternatively be referred to as random amplitude, or adjustment amplitude, or the like, and all possible names thereof are not exhaustive herein.

In one embodiment, the sensing signal may include a plurality of sensing modulation symbols. Each sensing modulation symbol may correspond to one phase adjustment parameter and/or one amplitude adjustment parameter. That is, the number of phase adjustment parameters and/or amplitude adjustment parameters may be equal to the number of sensing modulation symbols.

The plurality of sensing modulation symbols are calculated for the sensing sequence based on the specified modulation manner. Since both the transmitting device and the receiving device calculate the plurality of sensing modulation symbols in the same manner, no distinction will be made.

Here, the sensing sequence may be the same for both the receiving device and the transmitting device, and the present embodiment is not limited to the manner in which the receiving device and the transmitting device obtain the same sensing sequence. The sensing sequence may alternatively be referred to as any one of a reference signal sequence, a sensing signal sequence, a reference sequence, a gold sequence, etc., and all possible names are not limited or exhaustive herein.

The specified modulation manner may be configured according to the actual situation, for example, it may be Quadrature Phase Shift Keying (QPSK). As long as the receiving device and the transmitting device both use the same specified modulation manner, it is within the protection scope of the present embodiment.

The sensing modulation symbol may alternatively be referred to as any one of a modulation symbol, a sensing symbol, a QPSK modulation symbol, or a QPSK symbol, and the like, and all possible names thereof are not limited or exhaustive in this embodiment.

Taking any phase adjustment parameter being the i-th phase adjustment parameter as an example, the i-th phase adjustment parameter may correspond to the i-th sensing modulation symbol. The i-th phase modulation parameter may be calculated by the following: a plurality of bits are extracted for the i-th time from the first partial byte stream of the first sequence, and calculation is performed on the plurality of bits extracted for the i-th time based on the first calculation method to obtain the i-th phase adjustment parameter. Where i is an integer greater than or equal to 0. It should be appreciated that both the transmitting device and the receiving device calculate each phase adjustment parameter in the same manner, and thus no distinction will be made.

Where the plurality of bits are extracted for the i-th time from the first partial byte stream of the first sequence may refer to that: a starting significant bit of bits to be extracted for the i-th time is determined by taking a specified significant bit of the first byte stream in the first partial byte stream of the first sequence as a starting bit, and a plurality of bits are extracted from the starting significant bit.

The first partial byte stream of the first sequence may be a byte stream composed of all or part of the bits of the first sequence.

Exemplarily, the first partial byte stream of the first sequence may be M byte streams of the first sequence, and M may be a positive integer. The value of M may be defaulted by both the receiving device and the transmitting device, or may be specified in a protocol, or may be configured. Each of the M byte streams of the first sequence may include 8 consecutive bits in the first sequence, and different byte streams contain different bits in the first sequence.

The M byte streams of the first sequence may be the first M byte streams of the first sequence. Exemplarily, the first M byte streams may be first M byte streams starting from the first bit (or least significant bit) of the first sequence. The first M byte streams may be continuous byte streams or discontinuous byte streams. For example, the first M byte streams may include 8M consecutive bits starting from the first bit (or least significant bit) in the first sequence. For example, M may be equal to 7, and the first partial byte stream of the first sequence may be the first seven consecutive byte streams of the first sequence.

It should be appreciated that regardless of the number of byte streams included in the first partial byte stream, from which position in the first sequence is extracted, and whether each byte stream in the first partial byte stream is continuous or not, as long as both the transmitting device and the receiving device determine the first partial byte stream from the first sequence in the same manner, it is within the protection scope of the present embodiment, and is not limited or exhaustive here.

The specified significant bit of the first byte stream in the first partial byte stream may be defaulted by both the transmitting device and the receiving device, or specified by a protocol, or configured. For example, the specified significant bit of the first byte stream in the first partial byte stream may be the most significant bit, the least significant bit, or other specified significant bit of the first byte stream in the first partial byte stream, which is not limited or exhaustive here.

The number of the plurality of bits extracted for the i-th time from the first partial byte stream of the first sequence may be defaulted by both the transmitting device and the receiving device or specified by a protocol or configured. For example, the number of the plurality of bits extracted for the i-th time from the first partial byte stream of the first sequence may be 2 or 3, or more, or less. For example, the number of the plurality of bits may be related to the modulation order. For example, if the modulation order is 2, the number of the plurality of bits may be 2, and the method of determining the number of the plurality of bits is not limited or exhaustive here.

The first calculation method may be defaulted by both the transmitting device and the receiving device or may be specified by a protocol or configured.

If at least one of the specified significant bit of the first byte stream in the first partial byte stream, the value of M, the number of bits, and the first calculation method is configured, the receiving device may configure it for the transmitting device, the transmitting device may configure it for the receiving device, or the SF or the core network device may be configure it for the transmitting device and the receiving device. The method of configuring at least one of the specified significant bit of the first byte stream in the first partial byte stream, the value of M, the number of bits, and the first calculation method is not limited here.

For example, taking a 128-bit key stream (the first sequence) (consisting of a total of 16 byte streams) as an example, the first 7 byte streams (Octet0 - Octet6) are used to generate a random phase (i.e., the phase adjustment parameter). For instance, the most significant bit of Octet0 (consisting of 8 bits: B0, B1, B2, B3, B4, B5, B6, B7) is the specified significant bit of the first byte stream. Then, starting from the most significant bit of Octet0 and taking 2 bits in sequence (generally according to the modulation order), the phase symbol (phase adjustment parameter) can be calculated according to the following first calculation method: $α = k \times \frac{2 π}{{2}^{2}} = k \times \frac{π}{2}$, where k = (2 × B₆) + B₇ . Here, B₆, B₇ represent the values of the 2 bits extracted from Octet0 for the first time. α is the phase adjustment parameter calculated for the first time (such as the first phase adjustment parameter). Here, only the method of generating one phase adjustment parameter is illustrated as an example. In actual processing, similar methods can be used to calculate the phase adjustment parameter corresponding to each sensing modulation symbol, for each carrier of each symbol. The selection of the phase (phase adjustment parameter) has four options ( $0 , \frac{π}{2} , \frac{2 π}{2} , \frac{3 π}{2}$). When adjusting each sensing modulation symbol, the phase adjustment parameters are successively mapped to each resource of the sensing signal (such as each subcarrier of each symbol) until all subcarriers of all symbols of the sensing signal are mapped.

Taking any amplitude adjustment parameter being the j-th amplitude adjustment parameter as an example, the j-th amplitude adjustment parameter may correspond to the j-th sensing modulation symbol, and the j-th amplitude modulation parameter may be calculated in the following manner: a plurality of bits are extracted for the j-th time from the second partial byte stream of the first sequence, and the j-th amplitude adjustment parameter is obtained by performing calculation on the plurality of bits extracted for the j-th time based on the second calculation method, where j is a positive integer. It should be appreciated that both the transmitting device and the receiving device calculate each amplitude adjustment parameter in the same method, and therefore, no distinction will be made.

Herein, the operation of extracting the plurality of bits for the j-th time from the second partial byte stream of the first sequence may refer to that: a starting significant bit of the bit to be extracted for the j-th time is determined by taking a specified significant bit of the first byte stream of the second partial byte stream of the first sequence as a starting bit, and the plurality of bits are extracted starting from the starting significant bit.

The second partial byte stream of the first sequence may be a byte stream consisting of all or part of the bits of the first sequence. The second partial byte stream may be the same as or may be different from the first partial byte stream.

Exemplarily, the second partial byte stream of the first sequence may be K byte streams among the remaining bits except M byte streams in the first sequence, K may be a positive integer, and the value of K is the same as or different from the value of M. The value of K may be a value defaulted by both the receiving device and the transmitting device, or a value specified in a protocol, or a value configured. Each of the K byte streams may include 8 consecutive bits in the first sequence, different byte streams contain different bits in the first sequence.

The K byte streams may be K byte streams following the first M byte streams of the first sequence (i.e., the first partial byte stream). For example, the first bit (or first significant bit) of the K byte stream may be the first bit or first significant bit after the first M byte stream of the first sequence. The K byte stream may be a continuous byte stream or a discontinuous byte stream. For example, the K byte stream may include 8K consecutive bits in the first sequence starting with the first bit after the end of the first M byte stream. For example, K may also be equal to 7, i.e. the second partial byte stream of the first sequence may be 7 consecutive byte streams following the first 7 consecutive byte streams of the first sequence.

It should be appreciated that as long as both the transmitting device and the receiving device determine the first partial byte stream and the second partial byte stream from the first sequence in the same manner, regardless of whether the first partial byte stream and the second partial byte stream are the same, and whether the two partial byte streams are consecutive bits in the first sequence, respectively, it is within the protection scope of the present embodiment, and it is not limited or exhaustive here.

The specified significant bit of the first byte stream in the second partial byte stream may be defaulted by both the transmitting device and the receiving device, or may be specified by a protocol, or may be configured. For example, the specified significant bit of the first byte stream in the second partial byte stream may be the most significant bit, the least significant bit, or other significant bit, which is not limited or exhaustive herein.

The number of the plurality of bits extracted for the j-th time from the second partial byte stream of the first sequence may be the same or different from the number of the plurality of bits extracted for the i-th time from the first partial byte stream of the first sequence in the foregoing embodiment. For example, the number of the plurality of bits extracted for the j-th time from the second partial byte stream of the first sequence may be 2, or 3, or another number, and the number of the plurality of bits extracted for the i-th time from the first partial byte stream of the first sequence may be 2, or may be 3, or another number.

The second calculation method may be defaulted by both the transmitting device and the receiving device or may be specified by a protocol or configured.

If at least one of the specified significant bit of the first byte stream in the second partial byte stream, the value of K, and the second calculation method is configured, the receiving device may configure it for the transmitting device, the transmitting device may configure it for the receiving device, or the SF or the core network device may configure it for the transmitting device and the receiving device, and the method of configuring at least one of the specified significant bit of the first byte stream in the second partial byte stream, the value of K, and the second calculation method is not limited here.

For example, the second partial byte stream is different from the first partial byte stream. Taking the 128-bit key stream (the first sequence) (consisting of a total of 16 byte streams) as an example, the first 7 byte streams (Octet0 - Octet6) are used to generate a random phase (i.e., a phase adjustment parameter), which are the same as in the aforementioned implementation and will not be repeated here. Starting from Octet8 (including 8 bits: B0, B1, B2, B3, B4, B5, B6, B7), starting from the highest significant bit of Octet8, 2 bits are successively taken to calculate the random amplitude (amplitude adjustment parameters) according to the second calculation method: $β = \frac{k + 1}{{2}^{2}}$, where k = (2 × B₆) + B₇. Here, B₆, B₇ represent the values of the 2 bits extracted from Octet8 for the first time, and β is the amplitude adjustment parameter calculated for the first time (such as the first amplitude adjustment parameter). When β < βₘᵢₙ (βₘᵢₙ is used to ensure that the sensing performance does not lower than the expected sensing accuracy, for example, it can be set to 0.5), this value is discarded, and the next two bits are selected for the generation of random amplitude (amplitude adjustment parameter). Its generation or calculation method is the same as that in the aforementioned example and will not be repeated here.

It should be pointed out that in order to further improve the security of the sensing signal, the number of the bits of key can be freely selected to increase the generation state space of random amplitude and random phase, for example, it can be generated according to 3 bits of the key stream.

Taking the phase adjustment parameters as an example, if, for instance, the first 7 byte streams Octet0 to Octet6 of the 128-bit key stream (the first sequence) (which consist of 16 byte streams) is used to generate the random phase (i.e., the phase adjustment parameter), for example, the most significant bit of Octet0 (consisting of 8 bits: B0, B1, B2, B3, B4, B5, B6, B7) is the designated significant bit of the first byte stream, then 3 bits can be successively taken starting from the most significant bit of Octet0 (generally, the number of bits is determined according to the modulation order) to calculate the phase symbol (the phase adjustment parameter) according to the following first calculation method: $α = k \times \frac{2 π}{{2}^{3}}$ , where k = (2² × B₅) + (2 × B₆) + B₇. B₅, B₆, B₇ represent the values of the 3 bits extracted from Octet0 for the first time, and α is the phase adjustment parameter calculated for the first time (such as the first phase adjustment parameter).

It should be noted that in the case where the number of symbols (i.e., sensing modulation symbols) is small, the key byte stream (first sequence) may not be used up, while in the case where the number of symbols (sensing modulation symbols) is large, the key stream (first sequence) may take values in the order of (B0, B1), (B1, B2), (B2, B3). For example, in the calculation of the phase adjustment parameter, a plurality of bits are sequentially extracted starting from the least significant bit of the first byte stream of the first M byte streams of the first sequence to calculate the phase adjustment parameter. In the calculation of the amplitude adjustment parameter, a plurality of bits are extracted sequentially starting from the least significant bit of the first byte stream among the K byte streams after the first M byte streams of the first sequence to calculate the amplitude adjustment parameter.

In one embodiment, at the transmitting device side, the processing of transmitting the sensing signal may include operations that: a sensing modulation symbol is obtained based on a sensing sequence; a first sequence is calculated based on the shared key, an adjustment parameter is calculated based on the first sequence; a sensing modulation symbol is adjusted based on the adjustment parameter to obtain the adjusted sensing modulation symbol, and the sensing signal is generated and transmitted based on the adjusted sensing modulation symbol.

The operation that the sensing modulation symbol is obtained based on the sensing sequence may be an operation that each sensing modulation symbol may be obtained by modulating a plurality of bits extracted from the sensing sequence each time based on a specified modulation manner.

Taking the specified modulation manner being the QPSK as an example, the method of generating each sensing modulation symbol may be: 2 bits are extracted from the sensing sequence each time, and a corresponding sensing modulation symbol is obtained by performing modulation using the QPSK manner based on the two bits extracted each time. For any sensing modulation symbol being the m-th sensing modulation symbol, it can be expressed by the following formula: $r \left(m\right) = \frac{1}{\sqrt{2}} \left(1-2c\left(2m\right)\right) + j \frac{1}{\sqrt{2}} \left(1-2c\left(2m+1\right)\right)$, where c(2m) and c(2m +1) are the specific values of two bits extracted from the sensing sequence, respectively, and r(m) represents the m-th sensing modulation symbol.

The operation that the first sequence is calculated based on the shared key and the adjustment parameter is calculated based on the first sequence may refer to operations that the first sequence is calculated based on the shared key and the adjustment parameter corresponding to each sensing modulation symbol is calculated based on the first sequence. Herein the adjustment parameter corresponding to each sensing modulation symbol may include a phase adjustment parameter corresponding to each sensing modulation symbol and/or an amplitude adjustment parameter corresponding to each sensing modulation symbol.

The operation that the sensing modulation symbol is adjusted based on the adjustment parameter to obtain the adjusted sensing modulation symbol may include operations that: phase rotation is performed on each sensing modulation symbol based on a phase adjustment parameter corresponding to the sensing modulation symbol, and/or amplitude adjustment is performed on each sensing modulation symbol based on an amplitude adjustment parameter corresponding to the sensing modulation symbol; finally, the phase-rotated sensing modulation symbol and/or amplitude-adjusted sensing modulation symbols are obtained.

The sensing resource may include a plurality of time-frequency resources, different time-frequency resources have different time domain ranges and/or frequency domain ranges, and different adjusted sensing modulation symbols correspond to different time-frequency resources. The location of the specific time-frequency resources of the plurality of time-frequency resources may be default or specified in a protocol, and is not limited herein.

The process of generating and transmitting the sensing signal based on the adjusted sensing modulation symbol may include operations that the adjusted sensing modulation symbol is mapped to a sensing resource, and the sensing signal is generated and transmitted. It should be appreciated that this embodiment is merely an exemplary description, and in the actual processing, other methods specified in the protocol or other methods specified in the relevant protocol may be used for processing, which is not limited or exhaustive herein.

Referring to FIG. 7, taking the transmitting device being a base station and the phase adjustment and amplitude adjustment being performed on the sensing modulation symbol as an example, an exemplary illustration of the processing of the transmitting device is provided: The base station performs QPSK modulation on multiple bits (denoted as r) in the reference signal sequence to obtain QPSK modulation symbols (denoted as s); calculate a random phase α (i.e., the phase adjustment parameter) and a random amplitude β (i.e., the amplitude adjustment parameter) based on the key sequence (i.e., the first sequence); add the random phase α and the random amplitude β to the QPSK modulation symbol s to obtain *s · β· e^{jα}*, (where *s · β· e^{jα}* represents the adjusted sensing modulation symbol, and s equals $r \left(m\right) = \frac{1}{\sqrt{2}} \left(1-2c\left(2m\right)\right) + j \frac{1}{\sqrt{2}} \left(1-2c\left(2m+1\right)\right)$ to represent the sensing modulation symbol); generate the sensing signal based on the adjusted sensing modulation symbol and transmit the sensing signal through the channel h. Here, s can refer to any sensing modulation symbol, and the random phase α (i.e., the phase adjustment parameter) and the random amplitude β (i.e., the amplitude adjustment parameter) correspond to this sensing modulation symbol. Since the specific processing method for each sensing modulation symbol is the same, no further elaboration is provided.

In addition, only the phase adjustment or amplitude adjustment may be performed on the sensing modulation symbols. For example, taking only the phase adjustment as an example, the processing after the base station obtains the mapped QPSK modulation symbol (such as denoted as s) can be replaced by:, the random phase α (i.e., the phase adjustment parameter) is calculated based on the key sequence (i.e., the first sequence); and the random phase α is added to the QPSK modulation symbol s to obtain *s* · *e^{jα}*. For example, taking only the amplitude adjustment as an example, the processing after the base station obtains the mapped QPSK modulation symbol (such as denoted as s) by can be replaced by:, the random amplitude β is calculated based on the key sequence (i.e., the first sequence); and the random amplitude β is added to the QPSK modulation symbol s to obtain *s · β*.

It should be noted that the above processing of adjusting the amplitude is merely an exemplary explanation, and in the actual processing, the amplitude adjustment parameter may be directly used as the calculation parameter of the QPSK modulation symbol itself, and various possible ways of adjusting the amplitude are not exhaustive and limited here.

At the receiving device side, the processing after receiving the echo signal of the sensing signal may include an operation that a sensing result is obtained based on the adjustment parameter and the echo signal of the sensing signal.

Specifically, the processing at the receiving device side (that is, the operation that a sensing result is obtained based on the adjustment parameter and the echo signal of the sensing signal) may include operations that: the echo signal of the sensing signal is demodulated based on the adjustment parameter to obtain a demodulated echo signal; and the sensing result is obtained based on the sensing modulation symbol and the demodulated echo signal.

The operation that the echo signal of the sensing signal is demodulated based on the adjustment parameter to obtain the demodulated echo signal may be that phase demodulation is performed on the echo signal of the sensing signal based on the phase adjustment parameter; and/or amplitude demodulation is performed on the echo signal of the sensing signal based on the amplitude adjustment parameter, so as to obtain each phase demodulated echo signal and/or amplitude demodulated echo signal. For example, there may be a plurality of adjustment parameters, and the sensing modulation symbol corresponding to each adjustment parameter and the position of the sensing resource corresponding to each sensing modulation symbol are known to both the transmitting device and the receiving device, so the receiving device may determine the sensing resource corresponding to each adjustment parameter.

The operation that the sensing result is obtained based on the sensing modulation symbol and the demodulated echo signal may include operations that: channel estimation is performed based on the sensing modulation symbol and the demodulated echo signal to obtain a channel estimation result; and the sensing result is obtained based on the channel estimation result. Here, the receiving device calculates each sensing modulation symbol in the same manner as the transmitting device, and the description is not repeated. A manner of obtaining the sensing result based on the channel estimation result is not limited in the present embodiment.

Exemplarily, the process of demodulating the echo signal may further include at least one of FFT, demapping, and the like. In some possible examples, it may include operations that FFT (Fast Fourier Transformation) is performed on the echo signal of the sensing signal received on each sensing resource and then demapping is performed to obtain the demapped echo signal; the demapped echo signal is demodulated based on the adjustment parameter to obtain the demodulated echo signal. It should be appreciated that here merely gives an exemplary description, and other related processing of the echo signal may be included in the actual processing, and the processing timing is not limited to the above-described manner. The present embodiment does not limit or exhaustively list all processing or processing timing that may be performed when demodulating the echo signal.

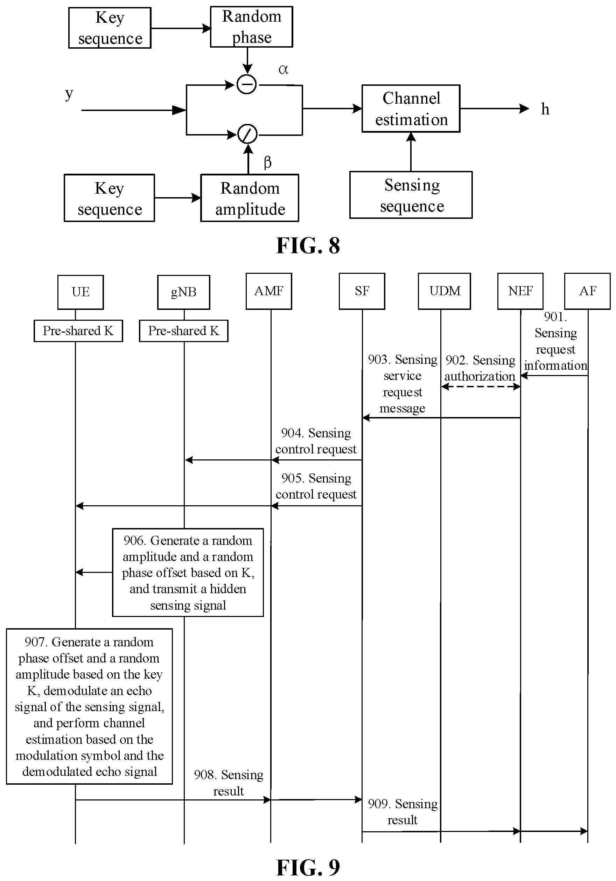

Referring to FIG. 8, taking the case where the receiving device is UE and phase and amplitude demodulations are performed on the echo signal of the sensing signal as an example, an illustrative explanation of the processing of the receiving device is provided: UE receives the echo signal *y* = *hs · β· e^{jα} + n* reflected by the sensing target, where y represents the echo signal of the sensing signal, h is the sensing channel, n is noise, and *s · β· e^{jα}* is the sensing modulation symbol adjusted by the base station side; UE calculates the key sequence (i.e., the first sequence) in the same method as the base station based on Ksf, and calculates the random phase α̂ and random amplitude β̂ based on the key sequence (since the random phase and random amplitude theoretically should be the same as those of the base station, they are still represented as random phase α and random amplitude β in FIG. 8), demodulates y to obtain the echo signal ; UE performs QPSK modulation based on the known sensing sequence to generate the sensing modulation symbol s, and performs channel estimation based on s and the demodulated echo signal to obtain the channel h (the channel estimation result of channel h); UE stores the obtained CSI (for example, it can include the channel estimation result of channel h).

In some possible embodiments, the shared parameter is a generation parameter for a plurality of sequences. That is, the shared parameter of the transmitting device and the receiving device refers to a generation parameter for a plurality of sequences shared by the transmitting device and the receiving device.

The adjustment parameter is calculated based on at least one of a plurality of second sequences, the plurality of second sequences is calculated based on the generation parameter for the plurality of sequences.

Here, the plurality of sequences may refer to a chaotic sequence, for example, a noise-like chaotic sequence. The noise-like chaotic sequence is mainly generated by a method such as Tent mapping, Cubic mapping, Logistic mapping, etc. This embodiment does not limit or exhaust all possible mapping methods for generating chaotic sequences.

The generation parameter for the plurality of sequences may include at least one of an initial chaos value, a control parameter, and a maximum index value. The initial chaotic value is an initial value for calculating the plurality of second sequences. The control parameter may be a plurality of adjustment values for the second sequence. A range of a value of the control parameter may be configured according to the actual situation, for example, it may be greater than 0 and less than 1, or may be greater than or equal to 0 and less than or equal to 1, etc., which is not limited or exhaustive here. The maximum index value may be used to indicate the length of each second sequence or the number of values included by each second sequence.

The generation parameter for the plurality of sequences may be configured in advance in the transmitting device and the receiving device, or the generation parameter for the plurality of sequences may be specified in a protocol, or the generation parameter for the plurality of sequences may be determined by the transmitting device and instructed to the receiving device, or the generation parameter for the plurality of sequences may be determined by the receiving device and configured to the transmitting device, or the generation parameter for the plurality of sequences may be configured by the core network device or the SF to the transmitting device or the receiving device , respectively. As long as the generation parameter for the plurality of sequences stored by the transmitting device and the receiving device are the same, they are within the protection scope of the present embodiment.

A method of generating the plurality of second sequences may include calculating the plurality of second sequences based on a third calculation method and the generation parameter for the plurality of sequences. Specifically, the operation of calculating the plurality of second sequences based on the third calculation method and the generation parameter for the plurality of sequences may be that: when the value in each second sequence is calculated for the first time, the first value in each second sequence is calculated by using the initial chaotic value and the control parameter based on the third calculation method; it is determined whether the number of values included in each second sequence reaches a maximum index value; if the maximum index value is not reached, a current value in each second sequence is calculated by using a previous value in each second sequence and a control parameter based on a third calculation method; if the maximum index value is reached, the calculation is stopped and each second sequence is obtained.

Exemplarily, the number of the plurality of second sequences may be two, and the operation that the plurality of second sequences are calculated based on the third calculation method and the generation parameter for the plurality of sequences may be expressed as: $\left\{\begin{matrix}{x}_{i + 1} = sin \left(π\left(4{θx}_{i}\left(1-{x}_{i}\right)+\left(1-θ\right)sin\left({πy}_{i}\right)\right)\right) \\ {y}_{i + 1} = sin \left(π\left(4{θy}_{i}\left(1-{y}_{i}\right)+\left(1-θ\right)sin\left({πx}_{i + 1}\right)\right)\right)\end{matrix}\right. ;$
where θ is a control parameter ranging from 0 to 1, *xᵢ, yᵢ* are previous values in the two second sequences, and *x*_{*i+*1}, *y*_{*i+*1} are current values of the two second sequences.

The phase adjustment parameter and the amplitude adjustment parameter are calculated based on different second sequences in the plurality of second sequences. Here, in order to clearly describe the plurality of second sequences hereinafter, a second sequence in the plurality of second sequences for calculating the phase adjustment parameter is referred to as a phase adjustment sequence, and a second sequence in the plurality of second sequences for calculating the amplitude adjustment parameter is referred to as an amplitude adjustment sequence.

Optionally, the sensing signal may include a plurality of sensing modulation symbols, and each sensing modulation symbol may correspond to one phase adjustment parameter and/or one amplitude adjustment parameter. That is, the number of the phase adjustment parameters and/or the amplitude adjustment parameters may be equal to the number of sensing modulation symbols; and the number of sensing modulation symbols may be equal to the maximum index value.

The related description of the plurality of sensing modulation symbols is the same as that of the foregoing embodiments, and will not be repeatedly described.

The n-th phase adjustment parameter may correspond to the n-th sensing modulation symbol. The n-th phase modulation parameter may be calculated using the following manner: the n-th value is extracted from the phase adjustment sequence, and the n-th phase adjustment parameter is obtained by performing calculation on the n-th value based on the fourth calculation method, where n is an integer greater than or equal to 0 and less than or equal to the maximum index value.

For example, the operation that the n-th phase adjustment parameter is obtained by performing calculation on the n-th value based on the fourth calculation method may be expressed as: *α* = *xₙ* · 2*π*, where α is the n-th phase adjustment parameter, and *xₙ* is the n-th value in the phase adjustment sequence.

The n-th amplitude adjustment parameter may correspond to the n-th sensing modulation symbol The n-th amplitude modulation parameter may be calculated by the following manner: the n-th value is extracted from the amplitude adjustment sequence, and the n-th amplitude adjustment parameter is obtained by performing calculation on the n-th value based on the fifth calculation method.

For example, the operation that the n-th amplitude adjustment parameter is obtained by performing calculation on the n-th value based on the fifth calculation method may be expressed as: *β* = (1 - *β*min) *· yₙ + β*ₘᵢₙ, where *β* is the n-th amplitude adjustment parameter, *yₙ* is the n-th value in the amplitude adjustment sequence, and βₘᵢₙ represents the minimum amplitude value required to satisfy sensing performance and sensing accuracy. The minimum amplitude value may also be a parameter shared by the transmitting device and the receiving device. The minimum amplitude value may be configured in advance in the transmitting device and the receiving device, or the minimum amplitude value may be specified in a protocol, or the minimum amplitude value may be determined by the transmitting device and indicated to the receiving device, or the minimum amplitude value may be determined by the receiving device and configured to the transmitting device, or the minimum amplitude value may be configured by the core network device or the SF to the transmitting device or the receiving device, respectively. As long as the minimum amplitude values stored by the transmitting device and the receiving device are the same, it is within the protection range of the present embodiment.

In the present embodiment, the processing in which the transmitting device processes and transmits the sensing signal based on the adjustment parameter corresponding to each sensing modulation symbol is the same as that in the foregoing embodiment and the processing in which the receiving device demodulates the echo signal of the received sensing signal based on each adjustment parameter is also the same as that in the foregoing embodiment, the description thereof will not be repeated.

In some possible embodiments, the processing after the receiving device obtains the sensing result may further include an operation that the sensing result is reported.

The operation that the sensing result is reported by the receiving device may be one of: transmitting the sensing result to the core network device and transmitting the sensing result to the SF.

For example, the receiving device is a terminal, is triggered by the sensing control request transmitted by the SF, and accordingly, the terminal may directly report the sensing result to the SF. Alternatively, the process of measuring the echo signal of the sensing signal by the terminal is triggered by the message transmitted by the core network device, and accordingly, the terminal may report the sensing result to the core network device (the sensing result may be reported to the SF by the core network device), and the sensing result may be carried by the NAS message. Alternatively, the process of measuring the echo signal of the sensing signal by the terminal is triggered by the message transmitted by the access network device, and accordingly, the terminal may report the sensing result to the access network device, and the sensing result may be carried by the AS message.

For example, the receiving device is an access network device, the measurement of the echo signal of the sensing signal by the access network device is triggered by the sensing control request transmitted by the SF, and accordingly, the access network device can directly report the sensing result to the SF. Alternatively, the process of measuring the echo signal of the sensing signal by the access network device may triggered by a message transmitted by the core network device, and accordingly, the access network device may report the sensing result to the core network device.

Referring to FIG. 9, a solution provided by an embodiment of the present application is illustratively described. The flow schematically illustrated in FIG. 9 is a flow of a UE-gNB downlink sensing scenario. The gNB transmits a sensing reference signal (which may also be a DM-RS, CSI-RS, PRS, etc.) based on QPSK modulation. The UE receives and measures an echo signal reflected by the sensing target. For the supported sensing services in which the sensing measurement result is strongly correlated with amplitude and phase (for example, human behavior detection using CSI amplitude and phase), the gNB generates a random amplitude and a random phase based on the shared key (random sequence) and adds the random amplitude and random phase to the signal to be transmitted. The UE generates the same random amplitude and random phase based on the shared key (random sequence), then demodulates and channel estimates the received sensing signal, and stores the acquired CSI. Illegal eavesdroppers cannot obtain any amplitude and phase information because they do not know the shared key (random sequence) and cannot perform demodulation and channel estimation. Specifically, as shown in FIG. 9, it includes the following operations:

A base station and UE share a key K (which may be a shared key Ksf in the foregoing embodiment), respectively. In one manner, the key is a kgNB and a derived key thereof. In another manner, it may a new shared key by the gNB and the UE.

Operation 901: a AF (which may be a sensing application function) transmits sensing request information to a NEF, the sensing request information carries a service type (an ID of a sensing service), a service requirement (sensing measurement type (determining whether it is the amplitude protection, the phase protection or the combination protection later), a sensing accuracy, a frame rate, a duration, target Area information, a delay, sensing participating node information (e.g., UE, gNB identifier)), etc.

Operation 902: The NEF performs an authorization check on the sensing request information of the AF. Authorization information may be locally stored in the NEF or a Unified Data Management (UDM). Assuming that the authorization information is stored in the UDM, the operation 902 may be that the NEF may request authorization verification from the UDM; the NEF obtains privacy check information from the UDM and performs a privacy check.

Operation 903: After the authorization is passed, the NEF selects, according to Area/Object information in the AF request, an SF serving the area, and transmits a sensing service request message to the SF. The content carried by the sensing service request message may be the same as that of the sensing request message.

Operation 904: The SF selects an appropriate gNB according to target Area information/target object location information in the sensing service request message, and transmits a sensing control request to the gNB through the AMF to control the gNB to transmit a sensing signal. The sensing control request may include a sensing service ID. The contents that may be included in the sensing control request are the same as those in the foregoing embodiment, and will not be repeatedly described.

Operation 905: The SF selects an appropriate UE according to the target Area information/target object location information in the sensing service request message, and transmits a sensing control request to the UE through the AMF to control the UE to measure the sensing reference signal. The contents that may be included in the sensing control request are the same as those in the foregoing embodiment, and will not be repeatedly described.

It should be appreciated that there may also be messages such as sensing-related assistance data transmission prior to performing operation 906, which are not illustrated in this example.

Operation 906: The gNB generates a random phase α and a random amplitude β based on the key K; then add them to a modulated sensing reference symbol and transmits respectively a hidden sensing signal (i.e. the sensing signal after adjusting the amplitude and/or adjusting the phase). The specific processing method of this operation is the same as that of the foregoing embodiment, and will not be repeatedly described.

Operation 907: The UE perform synchronization based on a time in operation 901, and the UE receives an echo signal of a fused sensing signal reflected by a sensing target. The UE generates a random phase and a random amplitude based on the key K, demodulates an echo signal of the sensing signal to obtain a demodulated echo signal, performs QPSK modulation based on a known sensing sequence to generate a modulation symbol, and performs channel estimation based on the modulation symbol and the demodulated echo signal to obtain a sensing result (specifically, CSI). The specific processing method of this operation is the same as that of the foregoing embodiment, and will not be repeatedly described.

Operation 908: The UE transmits the sensing result to the SF through the AMF. Optionally, the UE may transmit the sensing measurement value directly to the SF.

Operation 909: The SF transmits the sensing result to the AF through the NEF.

With the solution provided by the embodiment of the present application, the phase adjustment parameter and/or the amplitude adjustment parameter are calculated using parameters shared only by both the receiving device and the transmitting device, and then the phase and/or amplitude adjustment of the sensing signal is performed based on the phase adjustment parameter and/or the amplitude adjustment parameter. In this way, the phase and/or amplitude of the sensing signal can be hidden, and only the receiving device sharing the same parameter as the transmitting device can obtain the correct sensing result, so that the privacy of the sensing target can be protected from being stolen from the sensing signal level, and the sensing security is improved.

Further, in the scheme provided by the embodiment of the present application, the sensing signal is protected in combination with random amplitude and/or random phase, which can protect the sensing privacy information from being stolen from the signal level. Specifically, in the scheme provided by the embodiment of the present application, both the phase and amplitude of the sensing reference signal can be hidden by using random amplitude and random phase offset to enhance the randomness of the output signal. The eavesdropper cannot obtain any sensing result related to the amplitude and phase because there is no shared key. It can be applied to the sensing reference signal in any modulation mode. The key stream is used to generate the random phase and the random amplitude, which is well compatible with the existing reference signal generation process. Based on the sensing service and measurement data type, the random amplitude, the random phase, and the method of combining the random amplitude and the random phase may be flexibly selected. For example, in intrusion detection scenarios where CSI amplitude is used to identify human actions, the random amplitude can be used for encryption; in gesture recognition scenarios where CSI dynamic phase change and the like are used to recognize the gestures made by a person, the method of random phase rotation can be used; in a respiratory heartbeat scene where the method of combining the amplitude and phase is used to extract the respiratory rate, the method of combining the random amplitude and the random phase can be used.

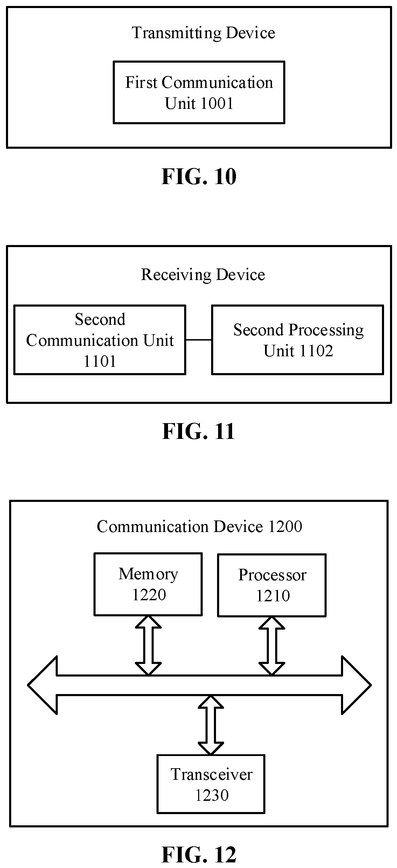

FIG. 10 is a schematic structural diagram of a transmitting device according to an embodiment of the present application. The transmitting device includes a first communication unit 1001.

The first communication unit 1001 is configured to transmit a sensing signal. The sensing signal is obtained by adjusting a sensing modulation symbol based on an adjustment parameter calculated based on a shared parameter of the transmitting device and the receiving device. The adjustment parameter includes at least one of a phase adjustment parameter and an amplitude adjustment parameter.

The shared parameter is a shared key.

The adjustment parameter is calculated based on a first sequence, and the first sequence is one of a key stream calculated based on the shared key, a hash sequence calculated based on the shared key, and a random sequence calculated based on the shared key.

The phase adjustment parameter is calculated based on a first calculation method and the first sequence; and/or the amplitude adjustment parameter is calculated based on a second calculation method and the first sequence. The first calculation method is different from the second calculation method.

The shared key is one of the following: a first key between the transmitting device and the receiving device, a key calculated based on the first key; and a key calculated based on a second key between the transmitting device and a core network device. Herein the first key is one of: an access layer key, an access layer security basic key, and a physical layer key.

The shared key is configured.

The shared parameter is a generation parameter for a plurality of sequences.

The adjustment parameter is calculated based on at least one of a plurality of second sequences, the plurality of second sequences are calculated based on the generation parameter for the plurality of sequences.

The phase adjustment parameter and the amplitude adjustment parameter are calculated based on different second sequences in the plurality of second sequences.

The transmitting device is a terminal and the receiving device is an access network device. Alternatively, the transmitting device is an access network device and the receiving device is a terminal.

FIG. 11 is a schematic structural diagram of a receiving device according to an embodiment of the present application. The receiving device includes a second communication unit 1101.

The second communication unit 1101 is configured to receive an echo signal of a sensing signal. Herein the sensing signal is obtained by adjusting a sensing modulation symbol based on an adjustment parameter calculated based on a shared parameter of the transmitting device and the receiving device. The adjustment parameter includes at least one of a phase adjustment parameter and an amplitude adjustment parameter.

As shown in FIG. 11, the receiving device further includes a second processing unit 1102.

The second processing unit 1102 is configured to demodulate the echo signal of the sensing signal based on the adjustment parameter to obtain a demodulated echo signal; and obtain the sensing result based on the sensing modulation symbol and the demodulated echo signal.

The shared parameter is a shared key.

The adjustment parameter is calculated based on a first sequence. The first sequence is one of a key stream calculated based on the shared key, a hash sequence calculated based on the shared key, and a random sequence calculated based on the shared key.

The phase adjustment parameter is calculated based on a first calculation method and the first sequence; and/or the amplitude adjustment parameter is calculated based on a second calculation method and the first sequence. The first calculation method is different from the second calculation method.

The shared key is one of: a first key between the transmitting device and the receiving device, a key calculated based on the first key; and a key calculated based on a third key between the receiving device and a core network device. The first key is one of: an access layer key, an access layer security basic key, and a physical layer key;.

The shared key is configured.

The shared parameter is a generation parameter for a plurality of sequences.

The adjustment parameter is calculated based on at least one of a plurality of second sequences, the plurality of second sequences are calculated based on the generation parameter for the plurality of sequences.

The phase adjustment parameter and the amplitude adjustment parameter are calculated based on different second sequences in the plurality of second sequences.

The transmitting device is a terminal and the receiving device is an access network device. Alternatively, the transmitting device is an access network device and the receiving device is a terminal.

The devices according to the embodiments of the present application can realize the corresponding function of each device in the above-described communication method embodiments. The corresponding processes, functions, implementation methods, and beneficial effects of each module (sub-module, unit, component, etc.) in the devices refer to the corresponding description in the above-described method embodiment, and will not be repeatedly described here. It should be noted that the functions described with respect to each module (sub-module, unit, component, etc.) in the devices of the application embodiment may be implemented by different modules (sub-modules, units, components, etc.), or may be implemented by the same module (sub-module, unit, component, etc.).

FIG. 12 is a schematic structural diagram of a communication device 1200 according to an embodiment of the present application. The communication device 1200 includes a processor 1210 that can call and run a computer program from a memory to cause the communication device 1200 to implement the methods in the embodiments of the present application.

In one possible implementation, the communication device 1200 may further include a memory 1220. The processor 1210 may call and run a computer program from the memory 1220 to cause the communication device 1200 to implement the methods in the embodiments of the present application. The memory 1220 may be a separate device independent of the processor 1210 or may be integrated in the processor 1210. In one possible implementation, the communication device 1200 may further include a transceiver 1230. The processor 1210 may control the transceiver 1230 to communicate with other devices, in particular, the processor 1210 may control the transceiver 1230 to transmit information or data to other devices or receive information or data transmitted by other devices. Transceiver 1230 may include a transmitter and a receiver. The transceiver 1230 may further include antennas, and the number of antennas may be one or more.

An embodiment of the present application provides a transmitting device, including a processor, a memory in communication with the processor. The memory is configured to store an instruction, which when executed by the processor, causes the transmitting device to transmit a sensing signal. The sensing signal is obtained by adjusting a sensing modulation symbol based on an adjustment parameter. The adjustment parameter is calculated based on a shared parameter of the transmitting device and the receiving device, and the adjustment parameter includes at least one of a phase adjustment parameter and an amplitude adjustment parameter.

An embodiment of the present application provides a receiving device, including a processor, a memory in communication with the processor. The memory is configured to store an instruction, which when executed by the processor, causes the receiving device to receive an echo signal of the sensing signal. Herein the sensing signal is obtained by adjusting a sensing modulation symbol based on an adjustment parameter. The adjustment parameter is calculated based on a shared parameter of the transmitting device and the receiving device, and the adjustment parameter includes at least one of a phase adjustment parameter and an amplitude adjustment parameter.

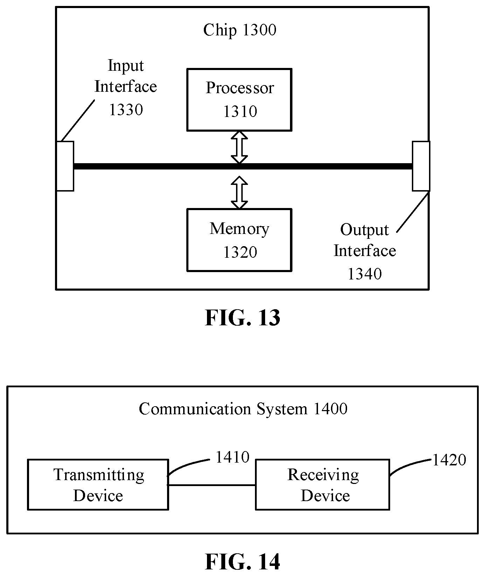

FIG. 13 is a schematic structural diagram of a chip 1300 according to an embodiment of the present application. The chip 1300 includes a processor 1310, which can call and run a computer program from a memory to implement the methods in the embodiments of the present application. In one possible implementation, the chip 1300 may further include a memory 1320. The processor 1310 may call and run a computer program from the memory 1320 to implement a method executed by each device in the embodiments of the present application. The memory 1320 may be a separate device independent of the processor 1310 or may be integrated in the processor 1310. In one possible implementation, the chip 1300 may further include an input interface 1330. The processor 1310 may control the input interface 1330 to communicate with other devices or chips. Specifically, the processor 1310 may control the input interface 1330 to acquire information or data transmitted by other devices or chips. In one possible implementation, the chip 1300 may further include an output interface 1340. The processor 1310 may control the output interface 1340 to communicate with other devices or chips. Specifically, the processor 1310 may control the output interface 1340 to output information or data to other devices or chips. In one possible implementation, the chip can be applied to each device in the embodiments of the present application, and the chip can implement corresponding processes implemented by each device in each method of the embodiments of the present application, and will not be repeatedly described here for the sake of simplicity. It should be appreciated that the chip mentioned in the embodiments of the present application may also be referred to as a system level chip, a system chip, a chip system or a system-on-chip.

The processors mentioned above may be general-purpose processors, digital signal processors, field programmable gate arrays, application specific integrated circuits or other programmable logic devices, transistor logic devices, discrete hardware components, and the like. The general-purpose processor mentioned above may be a microprocessor or any conventional processor or the like. The memory mentioned above may be a volatile memory or a non-volatile memory, or may include both volatile and non-volatile memory.

It should be appreciated that the above-described memory is illustrative but not limiting, and for example, the memory in the embodiments of the present application may also be a static random access memory, a dynamic random access memory, or the like.

FIG. 14 is a schematic block diagram of a communication system 1400 according to an embodiment of the present application. The communication system 1400 includes a transmitting device 1410 and a receiving device 1420. The embodiments described above may be implemented in whole or in part in software, hardware, firmware, or any combination thereof. When implemented in software, it may be implemented in whole or in part in the form of a computer program product. The computer program product includes one or more computer instructions. When the computer program instructions are loaded and executed on a computer, the processes or functions according to embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center by wired (e.g., coaxial cable, optical fiber, digital subscriber line) or wireless (e.g., infrared, wireless, microwave, etc.) means. The computer-readable storage medium may be any available medium accessible by a computer or a data storage device such as a server, a data center, or the like that contains one or more available media integrations. The available medium may be a magnetic medium, such as a hard disk, or a semiconductor medium, such as a solid state drive, or the like.

It should be appreciated that in various embodiments of the present application, the sequence numbers of the above-described processes do not mean the sequence of execution, and the sequence of execution of each process should be determined by its function and internal logic, and should not constitute any limitation on the implementation of the embodiments of the present application.

Those skilled in the art can clearly understand that for convenience and conciseness of the description, the specific working processes of the systems, devices, and units described above may refer to the corresponding processes in the aforementioned method embodiments, and will not be repeatedly described herein.

The above is merely a specific embodiment of the present application, but the protection scope of the present application is not limited thereto, and changes or substitutions which can be easily thought by any person skilled in the art within the technical scope disclosed in the present application, should be covered within the protection scope of the present application. Therefore, the protection scope of this application should be based on the protection scope of this claim.

## Claims

1. A communication method performed by a transmitting device, comprising:
transmitting a sensing signal, the sensing signal being obtained by adjusting a sensing modulation symbol based on an adjustment parameter, the adjustment parameter being calculated based on a shared parameter of the transmitting device and a receiving device, the adjustment parameter comprising at least one of a phase adjustment parameter or an amplitude adjustment parameter.

2. The method of claim 1, wherein the shared parameter is a shared key.

3. The method of claim 2, wherein the adjustment parameter is calculated based on a first sequence, the first sequence is one of a key stream calculated based on the shared key, a hash sequence calculated based on the shared key, or a random sequence calculated based on the shared key.

4. The method of claim 3, wherein the phase adjustment parameter is calculated based on a first calculation method and the first sequence; and/or the amplitude adjustment parameter is calculated based on a second calculation method and the first sequence, the first calculation method is different from the second calculation method.

5. The method of any one of claims 2-4, wherein the shared key is one of:
a first key between the transmitting device and the receiving device, wherein the first key is one of: an access layer key, an access layer security basic key, or a physical layer key;
a key calculated based on the first key; or
a key calculated based on a second key between the transmitting device and a core network device.

6. The method of any one of claims 2-4, wherein the shared key is configured.

7. The method of claim 1, wherein the shared parameter is a generation parameter for a plurality of sequences.

8. The method of claim 7, wherein the adjustment parameter is calculated based on at least one of a plurality of second sequences, the plurality of second sequences are calculated based on the generation parameter for the plurality of sequences.

9. The method of claim 8, wherein the phase adjustment parameter and the amplitude adjustment parameter are calculated based on different second sequences in the plurality of second sequences.

10. The method of any one of claims 1-9, wherein the transmitting device is a terminal and the receiving device is an access network device; or, the transmitting device is an access network device and the receiving device is a terminal.

11. A communication method performed by a receiving device, comprising:
receiving an echo signal of a sensing signal, the sensing signal being obtained by adjusting a sensing modulation symbol based on an adjustment parameter, the adjustment parameter being calculated based on a shared parameter of a transmitting device and the receiving device, the adjustment parameter comprising at least one of a phase adjustment parameter or an amplitude adjustment parameter.

12. The method of claim 11, further comprising:
demodulating the echo signal of the sensing signal based on the adjustment parameter to obtain a demodulated echo signal; and
obtaining a sensing result based on the sensing modulation symbol and the demodulated echo signal.

13. The method of claim 11 or 12, wherein the shared parameter is a shared key.

14. The method of claim 13, wherein the adjustment parameter is calculated based on a first sequence, the first sequence is one of a key stream calculated based on the shared key, a hash sequence calculated based on the shared key, or a random sequence calculated based on the shared key.

15. The method of claim 14, wherein the phase adjustment parameter is calculated based on a first calculation method and the first sequence; and/or the amplitude adjustment parameter is calculated based on a second calculation method and the first sequence, the first calculation method is different from the second calculation method.

16. The method of any one of claims 13-15, wherein the shared key is one of:
a first key between the transmitting device and the receiving device, wherein the first key is one of: an access layer key, an access layer security basic key, or a physical layer key;
a key calculated based on the first key; or
a key calculated based on a third key between the receiving device and a core network device.

17. The method of any one of claims 13-15, wherein the shared key is configured.

18. The method of claim 11 or 12, wherein the shared parameter is a generation parameter for a plurality of sequences.

19. The method of claim 18, wherein the adjustment parameter is calculated based on at least one of a plurality of second sequences, the plurality of second sequences are calculated based on the generation parameter for the plurality of sequences.

20. The method of claim 19, wherein the phase adjustment parameter and the amplitude adjustment parameter are calculated based on different second sequences in the plurality of second sequences.

21. The method of any one of claims 11-20, wherein the transmitting device is a terminal and the receiving device is an access network device; or, the transmitting device is an access network device and the receiving device is a terminal.

22. A transmitting device, comprising:
a first communication unit, configured to transmit a sensing signal, the sensing signal being obtained by adjusting a sensing modulation symbol based on an adjustment parameter, the adjustment parameter being calculated based on a shared parameter of the transmitting device and a receiving device, the adjustment parameter comprising at least one of a phase adjustment parameter or an amplitude adjustment parameter.

23. The transmitting device of claim 22, wherein the shared parameter is a shared key.

24. The transmitting device of claim 23, wherein the adjustment parameter is calculated based on a first sequence, the first sequence is one of a key stream calculated based on the shared key, a hash sequence calculated based on the shared key, or a random sequence calculated based on the shared key.

25. The transmitting device of claim 24, wherein the phase adjustment parameter is calculated based on a first calculation method and the first sequence; and/or the amplitude adjustment parameter is calculated based on a second calculation method and the first sequence, the first calculation method is different from the second calculation method.

26. The transmitting device of any one of claims 23-25, wherein the shared key is one of:
a first key between the transmitting device and the receiving device, wherein the first key is one of: an access layer key, an access layer security basic key, or a physical layer key;
a key calculated based on the first key; or
a key calculated based on a second key between the transmitting device and a core network device.

27. The transmitting device of any one of claims 23-25, wherein the shared key is configured.

28. The transmitting device of claim 22, wherein the shared parameter is a generation parameter for a plurality of sequences.

29. The transmitting device of claim 28, wherein the adjustment parameter is calculated based on at least one of a plurality of second sequences, the plurality of second sequences are calculated based on the generation parameter for the plurality of sequences.

30. The transmitting device of claim 29, wherein the phase adjustment parameter and the amplitude adjustment parameter are calculated based on different second sequences in the plurality of second sequences.

31. The transmitting device of any one of claims 22-30, wherein the transmitting device is a terminal and the receiving device is an access network device; or, the transmitting device is an access network device and the receiving device is a terminal.

32. A receiving device, comprising:
a second communication unit, configured to receive an echo signal of a sensing signal, the sensing signal being obtained by adjusting a sensing modulation symbol based on an adjustment parameter, the adjustment parameter being calculated based on a shared parameter of a transmitting device and the receiving device, the adjustment parameter comprising at least one of a phase adjustment parameter or an amplitude adjustment parameter.

33. The receiving device of claim 32, wherein the receiving device further comprises: a second processing unit configured to: demodulate the echo signal of the sensing signal based on the adjustment parameter to obtain a demodulated echo signal; and obtain a sensing result based on the sensing modulation symbol and the demodulated echo signal.

34. The receiving device of claim 32 or 33, wherein the shared parameter is a shared key.

35. The receiving device of claim 34, wherein the adjustment parameter is calculated based on a first sequence, the first sequence is one of a key stream calculated based on the shared key, a hash sequence calculated based on the shared key, or a random sequence calculated based on the shared key.

36. The receiving device of claim 35, wherein the phase adjustment parameter is calculated based on a first calculation method and the first sequence; and/or the amplitude adjustment parameter is calculated based on a second calculation method and the first sequence, the first calculation method is different from the second calculation method.

37. The receiving device of any one of claims 34-36, wherein the shared key is one of:
a first key between the transmitting device and the receiving device, wherein the first key is one of: an access layer key, an access layer security basic key, or a physical layer key;
a key calculated based on the first key; or
a key calculated based on a third key between the receiving device and a core network device.

38. The receiving device of any one of claims 34-36, wherein the shared key is configured.

39. The receiving device of claim 32 or 33, wherein the shared parameter is a generation parameter for a plurality of sequences.

40. The receiving device of claim 39, wherein the adjustment parameter is calculated based on at least one of a plurality of second sequences, the plurality of second sequences are calculated based on the generation parameter for the plurality of sequences.

41. The receiving device of claim 40, wherein the phase adjustment parameter and the amplitude adjustment parameter are calculated based on different second sequences in the plurality of second sequences.

42. The receiving device of any one of claims 32-41, wherein the transmitting device is a terminal and the receiving device is an access network device; or, the transmitting device is an access network device and the receiving device is a terminal.
